# EUROPÄISCHE PATENTSCHRIFT

(11) **EP 0 826 567 B1**
(45) Veröffentlichungstag und Bekanntmachung des Hinweises auf die Patenterteilung: **21.11.2001**
(21) Anmeldenummer: 97114733.5
(22) Anmeldetag: 26.08.1997
(51) Int. Cl.: B60R 25/00, B60R 25/10

(54) **Einrichtung zur Überwachung des Innenraumes eines Transportbehältnisses**
Device for monitoring the interior of a transport container
Dispositif de surveillance de l'intérieur d'un conteneur de transport

(30) Priorität: 27.08.1996 DE 19634562
(43) Veröffentlichungstag der Anmeldung: 04.03.1998
(73) Patentinhaber: ROBERT BOSCH GMBH, 70442 Stuttgart (DE)
(72) Erfinder: Meyer-Staufenbiel, Torsten, 71254 Ditzingen (DE)

(56) Entgegenhaltungen:
- EP-A- 0 427 559
- EP-A- 0 605 993
- DE-A- 3 313 358
- DE-A- 4 213 110
- FR-A- 2 571 322
- US-A- 5 416 464

## Beschreibung

### Stand der Technik

Die Erfindung geht aus von einem Transportbehältnis mit Alarmzentrale nach der Gattung des Hauptanspruchs. Zur Überwachung von Innenräumen in Personenkraftwagen sind seit längerem Ultraschallsystem bekannt, z. B. aus DE 43 34 179 A1, welche im scharfgeschalteten Zustand auf gegenständliche Bewegungen innerhalb des überwachten Raumes reagieren. Solche Systeme lassen sich grundsätzlich auch für die Überwachung von Innenräumen von Nutzfahrzeuganhängern einsetzen. Jedoch steht dieser Verwendung ihre in der Regel geringe Reichweite, ihre Fehlalarmanfälligkeit, sowie ihre Ungeeignetheit für rauhe Umgebungsbedingungen entgegen. Eine andere, z. B. in Form des Radarbewegungsmelders RBM 300 der Firma WH-ELEKTRONIK, Albstadt, bekannte Einrichtung sieht die Erfassung von Bewegungen mit Hilfe von Mikrowellen vor. Einrichtungen dieser Art werden insbesondere zur Überwachung von Räumen vor Türen eingesetzt, um deren automatisches Öffnen bzw. Schließen zu steuern.

Aus der EP-A 605 993 ist ein Sicherheitssensorsystem für ein Kraftfahrzeug bekannt. Ein Sensorsystem erhöht die Sicherheit gegenüber einem gewaltsamen Eindringen in den Innenraum des Kraftfahrzeugs. Zu diesem Zweck werden drei Sensortechniken genutzt. So wird die akustische Energie innerhalb des Kraftfahrzeugs sensiert. Außerdem ist ein Vibrationssensor vorgesehen. Als Bewegungssensoren im Innenraum des Kraftfahrzeugs kommen Radar- oder Mikrowellensensoren zum Einsatz. Dieses Dokument offenbart ein Transportbehältnis mit Alarmzentrale nach dem Oberbegriff des Anspruchs 1.

Aus der DE-A 42 13 110 ist eine Ortungseinrichtung bekannt. Diese dient insbesondere der Lokalisierung von Transporteinrichtungen wie beispielsweise von Lastkraftwagen. Die geografischen Daten der Transporteinrichtung können ausgewertet und angezeigt und beispielsweise auf grafischen Landkarten wiedergegeben werden. Ebenso ist der zu ortende Gegenstand mit einer Meldeeinrichtung versehen, die mit einer Sende- und Empfangsanlage einer Ortungseinrichtung zusammenwirkt. Die Position der Sende- und Empfangsanlage ist mit einer geeigneten Lokalisierungseinrichtung feststellbar.

Aufgabe der vorliegenden Erfindung ist, es ein Transportbehältnis anzugeben, welches die Überwachung dessen Innenraumes, insbesondere die des Laderaumes eines Nutzfahrzeuges oder eines Nutzfahrzeuganhängers gestattet.

Diese Aufgabe wird gelöst durch eine Einrichtung mit den kennzeichnenden Merkmalen des Hauptanspruchs. Die erfindungsgemäße Einrichtung eignet sich für eine wirkungsvolle Überwachung des Innenraumes eines in rauhen Umgebungsbedingungen eingesetzten Transportbehältnisses. Sie macht sich zunutze, daß Mikrowellensensoren hermetisch geschlossen ausgeführt werden können und dadurch an der Unterseite eines Transportbehältnisses plazierbar sind. Die erfindungsgemäße Einrichtung bietet den Vorteil, gegen Fehlalarme unempfindlich zu sein. Sie ist leicht und kostengünstig realisierbar, und auf vorhandene Nutzfahrzeuge nachrüstbar. Besonders vorteilhaft wird ein zu sicherendes Transportbehältnis mit einer Vielzahl von Mikrowellensensoren ausgestattet, welche so plaziert sind, daß sie einen Überwachungsvorhang entlang den Außenkanten des Transportbehältnisses bilden.

Ein Ausführungsbeispiel der Erfindung wird nachfolgend unter Bezugnahme auf die Zeichnungen näher erläutert.

### Zeichnung

Es zeigen Figur 1 einen Nutzfahrzeuganhänger, Figur 2 eine Alarmzentrale in einer Zugmaschine, Figur 3 eine Sensorverschaltung.

### Beschreibung

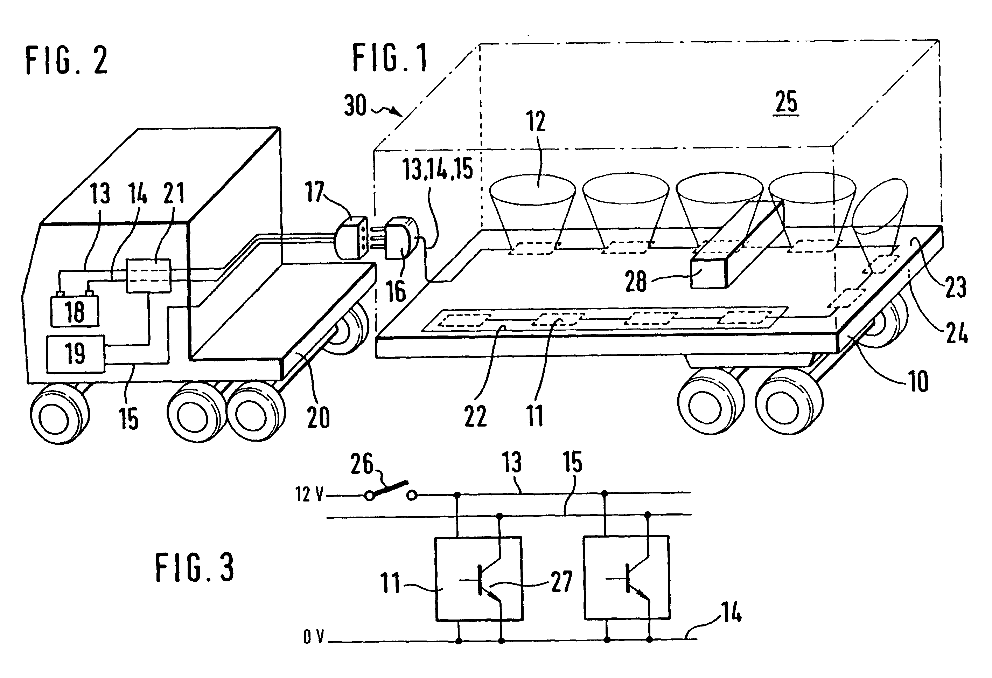

In Figur 1 ist mit der Bezugszahl 10 die Grundfläche eines Nutzfahrzeuganhängers 30 bezeichnet, auf deren Oberseite 23 Ladegut 28 ablegbar ist. An der Unterseite 24 der im folgenden Ladefläche genannten Grundfläche 10 befinden sich in jeweils abgeschlossenen Gehäusen, in die Schmutz von der Unterseite her nicht eindringen kann, mehrere Mikrowellensensoren 11, welche durch eine mehradrige Versorgungsleitung 13, 14, 15 miteinander verbunden sind. Sie sind so angeordnet, daß ihr, in Figur 1 durch den Kegel 12 angedeuteter Erfassungsbereich in dem über der Oberseite 23 der Ladefläche 10 befindlichen Raum liegt. Sofern sie aus Metall besteht, weist die Ladefläche 10 Schlitze 22 auf, um einen Durchgang der Mikrowellenstrahlung durch die Ladefläche 10 zu ermöglichen. Figur 1 deutet in stark vergrößerter Wiedergabe einen länglichen Schlitz 22 beispielhaft an. Tatsächliche Schlitze sind in ihrer Größe auf die Größe der Mikrowellensensoren 11 an der Unterseite abgestimmt. Zweckmäßig befinden sich innerhalb der Schlitze 22 mikrowellendurchlässige Abdeckungen, um ein Verschmutzen der Mikrowellensensoren 11 von der Ladeflächenoberseite 23 her zu vermeiden. Besteht die Ladefläche 10 über die Mikrowellensensoren 11 aus Holz, das für Mikrowellen durchlässig ist, sind Schlitze 11 nicht erforderlich. Über Zuleitungen 13, 14, die Teil der mehradrigen Leitungsverbindung 13, 14, 15 sind, erfolgt die Energieversorgung der Mikrowellensensoren 11. Weiterer Bestandteil der mehradrigen Leitungsverbindung ist eine Alarmkommunikations-leitung 15, über die im Falle der Detektion eines Alarmzustandes durch die Mikrowellensensoren 11 ein Alarmsignal geführt wird. Am von der Ladefläche 23 weggeführten Ende weist die mehradrige Leitungsverbindung 13, 14, 15 einen Steckanschluß 16 zur Anbindung an eine Alarmzentrale auf.

Entsprechend der im Ausführungsbeispiel zugrunde gelegten Anwendung in einem Nutzfahrzeuganhänger bildet die Alarmzentrale das zugehörige Zugfahrzeug 20, wie in Figur 2 dargestellt. Es verfügt über einen zum Steckanschluß 16 komplementären Steckanschluß 17, mittels dessen die ladeflächenseitigen Leitungsverbindungen 13, 14, 15 in das Zugfahrzeug geschleift werden. Im Zugfahrzeug 20 sind die Energiezuleitungen 13, 14 auf eine Batterie 18 geführt, bei der es sich vorzugsweise um die Batterie des Zugfahrzeuges handelt, die aber auch eine speziell zur Versorgung der Mikrowellensensoren vorgesehene Batterie sein kann. Die Alarmkommunikationsleitung 15 ist auf ein Diebstahlschutzsteuer gerät 19 geführt, welches die Auswertung der von den Mikrowellensensoren 11 auf die Kommunikationsleitung 15 abgegebenen Signale vornimmt. Mit dem Diebstahlschutzsteuergerät 19 weiterhin verbunden ist zweckmäßig eine Leitungsüberwachungseinrichtung 21, welche die Energiezuleitungen 13, 14 auf Strom-/Spannungsunterbrechungen überwacht.

Figur 3 gibt ein Beispiel für eine einfache elektrische Ausführung der vorgeschlagenen Alarmeinrichtung auf der Ladeflächenseite. Die Mikrowellensensoren 11 sind dabei zwischen die Energieleitungen 13, 14 parallelgeschaltet. Ebenfalls in Parallelschaltung sind sie weiterhin an die Alarmkommunikationsleitung 15 angeschlossen, wobei diese Anschaltung jeweils mittels eines im Mikrowellensensor 11 vorhandenen Transistors 27 erfolgt. Detektiert ein Mikrowellensensor 11 in seinem Erfassungsbereich 12 eine Bewegung, schaltet er den Transistor 27 durch. Daraus resultiert eine Spannungsänderung auf der Alarmkommunikationsleitung 15, die von dem Diebstahlschutzsteuergerät 19 erkannt wird. Mittels eines Schalters 26, der durch das Diebstahlschutzsteuergerät 19 kontrolliert wird, erfolgt die Scharfschaltung der Alarmeinrichtung.

Zweckmäßig ist es, die Mikrowellensensoren 11 so anzuordnen, daß ihre Erfassungsbereiche 12 sich zu einer Art Vorhang entlang den Außenkanten der Ladefläche 23 überlagern, und ihre Zahl entsprechend zu wählen. Zur Sicherstellung der Überwachungsfunktion genügt bereits eine Überwachung des Raumes unmittelbar über der Ladeflächenoberseite 23, hinreichend ist eine Erfassungsreichweite der Mikrowellensensoren 11 von ca. 50 cm. Eine solche Erfassungsbereichsbeschränkung reduziert zudem die Gefahr eines Fehlalarmes, etwa durch windbedingte Auslenkung der Abdeckung bei Planenaufbauten.

Bei Detektion eines Alarmsignales auf der Alarmkommunikationsleitung 15 leitet das Diebstahlschutzsteuergerät 19 Maßnahmen ein, um auf eine außerordentliche Situation im Laderaum 25 hinzuweisen. Vorzugsweise geschieht dies durch Erzeugung von optischen und/oder akkustischen Signalen im Innenraum des Zugfahrzeuges zur Information des Fahrers, sowie bei dessen Abwesenheit durch Absetzen eines Funksignales über die Fahrzeugantenne, mittels dessen der Fahrer oder stationäre polizeiliche Alarmzentralen benachrichtigbar sind. Zur Vermeidung von Fehlalarmen kann vorgesehen sein, nicht gleich beim ersten Ansprechen eines Mikrowellensensors 11 auf Vorliegen eines außerordentlichen Zustandes zu schließen, sondern beispielsweise zunächst ein erneutes Ansprechen eines Sensors 11 in einem vorgeschriebenen Zeitintervall abzuwarten, und erst dann einen Alarm auszulösen.

Neben der hier vorgeschlagenen einfachen Verschaltung der Mikrowellensensoren 11 sind selbstverständlich auch andere Konzepte möglich, etwa auf Einzelversorgung der Mikrowellensensoren 11 beruhende. Unter Beibehaltung des grundlegenden Gedankens ist desweiteren eine Vielzahl von abgewandelten Ausgestaltungen der Alarmzentrale 20 und der zu ergreifenden Maßnahmen bei Vorliegen eines Alarmsignales möglich. Bezüglich der Mikrowellensensoren 11 ist ferner denkbar, diese an einer Seitenfläche des Transportbehältnisses 30 oder an seiner Oberseite anzuordnen.

## Patentansprüche

1. Transportbehältnis mit Alarmzentrale zur Überwachung dessen Innenraumes insbesondere Ladefläche eines Nutzfahrzeuges wobei an oder in einer Wand (24) des Transportbehältnisses (30) ein oder mehrere, auf Bewegungen in ihrem Erfassungsbereich (12) reagierende Mikrowellensensoren (11) so angeordnet sind, daß die Erfassungsbereiche (12) in dem überwachten Innenraum (25) liegen **dadurch gekennzeichnet, daß** die Alarmzentrale (20) eine Überwachungseinrichtung (21) aufweist, welche die Stromversorgung (13,14) der Mikrowellensensoren (11) auf vorliegen einer Stromkreisunterbrechung überwacht.

2. Transportbehaltnis nach Anspruch 1, **dadurch gekennzeichnet, daß** die Mikrowellensensoren (11) unter der Grundfläche (10) des Transportbehältnisses (30) angeordnet sind.

3. Transportbehältnis nach Anspruch 1, **dadurch gekennzeichnet, daß** die Mikrowellensensoren (11) in Reihen so angeordnet sind, daß sich ihre Erfassungsbereiche (12) entlang den Außenkanten der Grundfläche (10) zu einem Vorhang aneinanderreihen oder überlagern.

4. Transportbehältnis nach Anspruch 3, **dadurch gekennzeichnet, daß** Mikrowellensensoren (11) nur entlang solchen Außenkanten der Grundfläche (10) angeordnet sind, die von außen regulär zugänglich sind.

5. Transportbehältnis nach Anspruch 1, **dadurch gekennzeichnet, daß** das Transportbehältnis (30) der Anhängerauflieger, Anhänger- oder Lastflächenaufbau eines Nutzfahrzeuges ist.

6. Transportbehältnis nach Anspruch 1, **dadurch gekennzeichnet, daß** in der Grundfläche (10) Schlitze (11) ausgebildet sind, durch welche sich die Erfassungsbereiche (12) der Mikrowellensensoren (11) in den über der Grundfläche befindlichen Raum (25) erstrecken.

7. Transportbehältnis nach Anspruch 1, **dadurch gekennzeichnet, daß** die Erfassungsbereiche (12) der Mikrowellensensoren (11) 40 bis 60 cm über der Grundflächenoberseite (23) enden.

8. Transportbehältnis nach Anspruch 1, **dadurch gekennzeichnet, daß** im Falle des Ansprechens eines Mikrowellensensors ein Alarmsignal an eine außerhalb des Transportbehältnisses (10) befindliche Alarmzentrale (20) geleitet wird.

## Claims

1. Transport container with alarm control centre for monitoring its interior, in particular load area of a utility vehicle, one or more microwave sensors (11) which react to movement in their coverage area (12) being arranged on or in a wall (24) of the transport container (30) in such a way that the coverage areas (12) lie in the monitored interior (25), **characterized in that** the alarm control centre (20) has a monitoring device (21) which monitors the power supply (13, 14) of the microwave sensors (11) for the presence of a circuit break.

2. Transport container according to Claim 1,
**characterized in that** the microwave sensors (11) are arranged under the base area (10) of the transport container (30).

3. Transport container according to Claim 1,
**characterized in that** the microwave sensors (11) are arranged in rows in such a way that their coverage areas (12) line up or are superimposed along the outer edges of the base area (12) to form a curtain.

4. Transport container according to Claim 3,
**characterized in that** microwave sensors (11) are arranged only along those outer edges of the base area (10) which are normally accessible from the outside.

5. Transport container according to Claim 1,
**characterized in that** the transport container (30) is the semi-trailer, trailer or load area structure of a utility vehicle.

6. Transport container according to Claim 1,
**characterized in that** slots (11) through which the coverage areas (12) of the microwave sensors (11) extend into the area (25) located above the base area are formed in the base area (10).

7. Transport container according to Claim 1,
**characterized in that** the coverage areas (12) of the microwave sensors (11) end 40 to 60 cm above the upper side (23) of the base area.

8. Transport container according to Claim 1,
**characterized in that** when a microwave sensor responds an alarm signal is conducted to an alarm control centre (20) located outside the transport container (10).

## Revendications

1. Conteneur de transport équipé d'une centrale d'alarme pour surveiller son volume intérieur, notamment la surface de chargement d'un véhicule utilitaire, sur ou dans une paroi (24) du conteneur (30), se trouvent un ou plusieurs capteurs à micro-ondes (11) réagissant aux mouvements se produisent dans leur zone de détection (12) et les zones de détection (12) se situent dans le volume intérieur (25) surveillé,
**caractérisé en ce que**
la centrale d'alarme (20) comporte une installation de surveillance (21) qui surveille l'alimentation en courant (13, 14) des capteurs à micro-ondes (11) pour détecter une éventuelle coupure du circuit électrique.

2. Conteneur de transport selon la revendication 1,
**caractérisé en ce que**
les capteurs à micro-ondes (11) sont prévus sous la surface de base (10) du conteneur de transport (30).

3. Conteneur de transport selon la revendication 1,
**caractérisé en ce que**
les capteurs à micro-ondes (11) sont montés en série de façon que leur zone de détection (12) se juxtapose ou se superpose le long des arêtes extérieures de la surface de base (10) pour former un rideau.

4. Conteneur de transport selon la revendication 3,
**caractérisé en ce que**
les capteurs à micro-ondes (11) ne sont installés que le long de telles arêtes extérieures de la surface de base (10), qui sont le plus régulièrement accessibles.

5. Conteneur de transport selon la revendication 1,
**caractérisé en ce que**
le conteneur de transport (30) est la semi-remorque, la remorque ou le plateau de chargement d'un camion.

6. Conteneur de transport selon la revendication 1,
**caractérisé en ce que**
des fentes (22) sont réalisées dans la surface de base (10) à travers lesquelles s'étend la zone de saisie (12) des capteurs à micro-ondes (11) dans le volume (25) qui se trouve au-dessus de la surface de base.

7. Conteneur de transport selon la revendication 1,
**caractérisé en ce que**
les zones de détection (12) des capteurs à micro-ondes (11) se terminent à entre 40 et 60 cm au-dessus de leur zone de surface de base (23).

8. Conteneur de transport selon la revendication 1,
**caractérisé en ce qu'**
en cas de sollicitation d'un capteur à micro-ondes, un signal d'alarme est transmis à une centrale d'alarme (20) qui se trouve à l'extérieur du conteneur de transport (10).
